Europäisches Patentamt

European Patent Office

Office européen des brevets

(11) Veröffentlichungsnummer: **0 449 153 A2**

## (12) EUROPÄISCHE PATENTANMELDUNG

(21) Anmeldenummer: 91104602.7

(22) Anmeldetag: 23.03.91

(51) Int. Cl.5: **H02H 7/08**

(30) Priorität: 29.03.90 DE 4010049

(43) Veröffentlichungstag der Anmeldung:
02.10.91 Patentblatt 91/40

(84) Benannte Vertragsstaaten:
DE FR GB IT

(71) Anmelder: GRUNDFOS INTERNATIONAL A/S
7-11, Poul Due Jensensvej
DK-8850 Bjerringbro(DK)

(72) Erfinder: Jensen, Niels Due
Pilevej 1
DK-8850 Bjerringbro(DK)
Erfinder: Knudsen, Ivan
Vestergade 74 A
DK-8850 Bjerringbro(DK)
Erfinder: Pedersen, Bjarne Dissing
Kappelsdal 126
DK-8450 Hammel(DK)

(74) Vertreter: Vollmann, Heiko, Dipl.-Ing. et al
Patentanwälte Wilcken & Wilcken,
Musterbahn 1
W-2400 Lübeck 1(DE)

(54) **Pumpenaggregat.**

(57) Das Pumpenaggregat (1,3) ist insbesondere für Heizungs- und Kühlanlagen vorgesehen. Die Drehzahl des Pumpenaggregats (1,3) kann durch Änderung der Arbeitsfrequenz eines den Elektromotor (3) speisenden Frequenzumrichters (4) verändert werden, der eine bauliche Einheit mit dem Pumpenaggregat bildet. Sobald das Pumpenaggregat eine die thermische Überlastung desselben kennzeichnende Größe erreicht hat, wird der Frequenzumrichter (4) drehzahlsenkend angesteuert, wobei die abgesenkte Drehzahl n' größer oder gleich der halben Normaldrehzahl n ist.

Die Erfindung betrifft ein Pumpenaggregat, insbesondere für Heizungs- und Kühlanlagen, dessen Drehzahl durch Änderung der Arbeitsfrequenz eines den Elektromotor speisenden Frequenzumrichters veränderbar ist, mit einer das Aggregat vor thermischer Überlastung schützenden Einrichtung, wobei Pumpenaggregat und Frequenzumrichter eine bauliche Einheit bilden.

Derartige Pumpenaggregate werden beispielsweise in Heizungsanlagen als Umwälzpumpen eingesetzt. Ein derartiges Pumpenaggregat ist beispielsweise in der DE-OS 36 42 729 beschrieben. Ein solches Pumpenaggregat wird regelmäßig mit einem Motorschutzschalter versehen, der den Motor im Falle thermischer Überlastung abschaltet. Hierzu ist in der Regel ein im Bereich der Motorwicklung angeordneter Thermostat vorgesehen, der ein im Klemmenkasten angeordnetes Relais ansteuert.

Das Abschalten des Pumpenaggregats bei thermischer Überlastung hat insbesondere beim Einsatz in Heizungs- und Kühlanlagen in der Regel einen vollständigen Ausfall der Anlage zur Folge, wenn nicht, wie beispielsweise bei Heizungsanlagen von Krankenhäusern üblich, ein zweites Pumpenaggregat vorgesehen ist, das bei Störung des ersten selbsttätig eingeschaltet wird. Eine derartige Einrichtung ist beispielsweise in der DE-OS 37 06 034 beschrieben. Bei derartigen Einrichtungen genügt der Motorschutzschalter als solcher also nicht, es ist zudem erforderlich, ein zweites völlig unabhängig vom ersten arbeitendes Pumpenaggregat zu installieren, um die Betriebssicherheit der Anlage auch bei Ausfall eines Pumpenaggregats zu gewährleisten. Der konstruktive und damit auch finanzielle Aufwand für solche Einrichtungen ist entsprechend hoch.

Aber auch der Einbau des üblicherweise vorgesehenen Motorschutzschalters in oder an ein solches Pumpenaggregat stellt einen im Verhältnis zu den Gesamtkosten nicht unerheblichen Kostenfaktor dar. Insbesondere bei den eingangs beschriebenen Pumpenaggregaten, die zur Drehzahlanpassung mit einem Frequenzumrichter ausgerüstet sind, ist es schon aus Platzgründen problematisch, das Relais des Motorschutzschalters am Pumpenaggregat anzuordnen, da der sonst hierfür üblicherweise vorgesehene Klemmenkasten als Einbauraum für den Frequenzumrichter oder Teile davon benötigt wird.

Ausgehend von dem eingangs genannten Stand der Technik liegt der Erfindung die Aufgabe zugrunde, ein gattungsgemäßes Pumpenaggregat auf einfache und kostengünstige Weise so auszubilden, daß einerseits aus Gründen der Baugröße und der Baukosten auf einen Motorschutzschalter der vorbeschriebenen Art verzichtet werden kann und andererseits auch bei thermischer Überlastung des Pumpenaggregats eine gewisse Notlaufeigenschaft gewährleistet wird, so daß ein Ausfall der vom Pumpenaggregat versorgten Anlage vermieden wird.

Diese Aufgabe wird bei einem Pumpenaggregat mit den im Oberbegriff des Anspruchs 1 aufgeführten Merkmalen erfindungsgemäß dadurch gelöst, daß beim Erreichen einer den Überlastzustand kennzeichnenden Größe die Motordrehzahl n durch Ansteuerung des Frequenzumrichters auf eine Motordrehzahl n' abgesenkt wird, wobei die abgesenkte Drehzahl n' größer oder gleich der halben Normaldrehzahl n gewählt ist.

Die erfindungsgemäße Lösung hat den wesentlichen Vorteil, daß im Falle thermischer Überlastung des Pumpenaggregat dieses nicht - wie bisher üblich - abgeschaltet, sondern lediglich in der Leistung heruntergeschaltet wird, was mittels des ohnehin vorhandenen Frequenzumrichters durch Absenken der Motordrehzahl erfolgt. Hierdurch kann einerseits auf den Einbau eines teuren und platzbenötigenden Motorschutzschalters verzichtet werden, andererseits kann in
Heizungsanlagen oftmals auf ein
gesondertes zweites Pumpenaggregat verzichtet werden, da das erfindungsgemäße Pumpenaggregat bei Gefahr thermischer Überlastung mit - wenn auch verminderter - Leistung arbeitet.

Die Erfindung nutzt dabei im besonderen Maße die für Kreiselpumpen geltenden Modellgesetze aus, wonach sich der Förderstrom etwa proportional zur Pumpendrehzahl ändert, während die Antriebsleistung der Pumpe mit der dritten Potenz der Drehzahl steigt. Dies hat zur Folge, daß schon bei verhältnismäßig geringer Drehzahlabsenkung die Antriebsleistung in einem erheblichen Maße zurückgeht, wodurch naturgemäß auch die Wärmeentwicklung innerhalb der Motorwicklung vermindert wird. Vermindert man beispielsweise die Drehzahl auf 80 Prozent der Normaldrehzahl n, dann sinkt die Antriebsleistung der Pumpe auf 51 Prozent der normalen Antriebsleistung, wobei jedoch der Förderstrom ebenfalls nur auf 80 Prozent des ursprünglichen Förderstroms absinkt. Beim Einsatz des erfindungsgemäßen Pumpenaggregats, beispielsweise in einer Heizungsanlage, würde eine derartige Drehzahlabsenkung kaum spürbare Auswirkungen auf das Heizungssystem haben, da durch die längere Verweildauer des Wassers und der größeren Abkühlung des Wassers im Heizkörper hier nur eine Minderleistung zwischen etwa 2 und 5 Prozent auszumachen wäre. Durch Verminderung der Antriebsleistung auf etwa die Hälfte, könnte jedoch die Motorwicklung durch die dann deutlich verminderte Motorwärmeentwicklung relativ schnell wieder abkühlen. Ein weiterer Vorteil im Vergleich zu einem im Falle der thermischen Überlastung vollständig auschaltenden Motorschalter liegt darin, daß durch das Weiterlaufen des Pumpenaggregats mit verminderter Leistung ein Wärmestau innerhalb des Motors vermieden werden kann, so daß die Grenztemperatur, bei der ein Herunterschalten der Drehzahl zur Vermeidung thermischer Überlastung des Aggregats erforderlich ist, höher liegen kann, als bei bekannten Pumpenaggregaten.

Weitere vorteilhafte Ausgestaltungen der Erfindung sind durch die in den Unteransprüchen aufgeführten Merkmale gekennzeichnet.

Zweckmäßigerweise wird als die den Überlastungszustand kennzeichnende Größe eine Temperatur herangezogen, wobei dann eine Grenztemperatur ermittelt wird, bei deren Erreichen der Frequenzumrichter drehzahlabsenkend angesteuert wird.

Vorteilhaft wird als Grenztemperatur eine höchstzulässige Temperatur der Motorwicklung bestimmt, da bei einem Pumpenaggregat der genannten Art überwiegend im Bereich der Motorwicklung thermische Überlastungszustände auftreten.

Je nach Bauart ist es jedoch nicht erforderlich, die Temperatur der Motorwicklung, beispielsweise durch Einsatz eines Temperaturfühlers, direkt zu messen. Die Motorwicklungstemperatur kann in der überwiegenden Zahl der Einsatzfälle auch sehr zuverlässig durch Messung elektrischer Größen, vorzugsweise durch Messung des Wicklungswiderstands, ermittelt werden. Eine solche mittelbare Bestimmung der Motorwicklungstemperatur hat den Vorteil, daß auf einen Fühler innerhalb der Wicklung verzichtet werden kann und lediglich ein elektronischer Baustein erforderlich ist, der ggf. mit der Elektronik des Frequenzumrichters kombiniert und/oder dort angeordnet sein kann.

Die Grenztemperatur, bei der der Frequenzumrichter drehzahlsenkend angesteuert wird, kann auch durch eine höchstzulässige Lagertemperatur innerhalb des Pumpenaggregats bestimmt sein. Erfindungsgemäß können auch mehrere den Überlastzustand kennzeichnende Größen vorbestimmt sein, bei deren Erreichen die Motordrehzahl abgesenkt wird. Es reicht dann selbstverständlich aus, wenn eine dieser Größen erreicht wird.

Auch kann die Temperatur in der Umrichterelektronik zur Bestimmung des Überlastzustandes herangezogen werden. Eine solche Ausbildung hat den Vorteil, daß die hierzu erforderlichen elektronischen Bauteile in der Frequenzumrichterelektronik angeordnet sein können, was fertigungstechnisch besonders günstig ist. Zweckmäßigerweise erfolgt die Temperaturmessung im Leistungsteil des Frequenzumrichters, da in diesem Bauteil die größte Verlustwärme abzuführen ist, und die dort entstehende Verlustwärme etwa proportional zu der in der Motorwicklung entstehenden Verlustwärme ist.

Eine thermische Überlastung des Pumpenaggregats kann nicht nur durch überhöhte Wärmeabgaben innerhalb des Aggregats selbst, sondern auch durch äußere Umstände hervorgerufen sein. Die Erfindung sieht deshalb neben den vorgenannten aggregatspezifischen, den Überlastzustand kennzeichnenden Größen, bei denen eine Motordrehzahlabsenkung erfolgt, auch vor, die Motordrehzahl dann abzusenken, wenn eine externe Größe, wie beispielsweise die Temperatur des geförderten Fluids einen vorbestimmten höchstzulässigen Wert überschreitet. Eine Drehzahlabsenkung ist dann erforderlich, da die innerhalb des Aggregats entstehende Verlustwärme nicht mehr in ausreichendem Maße abgeführt werden kann.

Vorteilhaft ist das Pumpenaggregat so ausgebildet, daß nach Absenkung der Drehzahl, sobald die den Überlastzustand kennzeichnenden Größe wieder unterschritten wird, die Drehzahl dann wieder auf die ursprüngliche Normaldrehzahl n angehoben wird. Zwischen den beiden Schaltpunkten sollte aus regelungstechnischen Gründen ein gewisser Abstand liegen, um ein ständiges Umsteuern des Frequenzumrichters zu vermeiden.

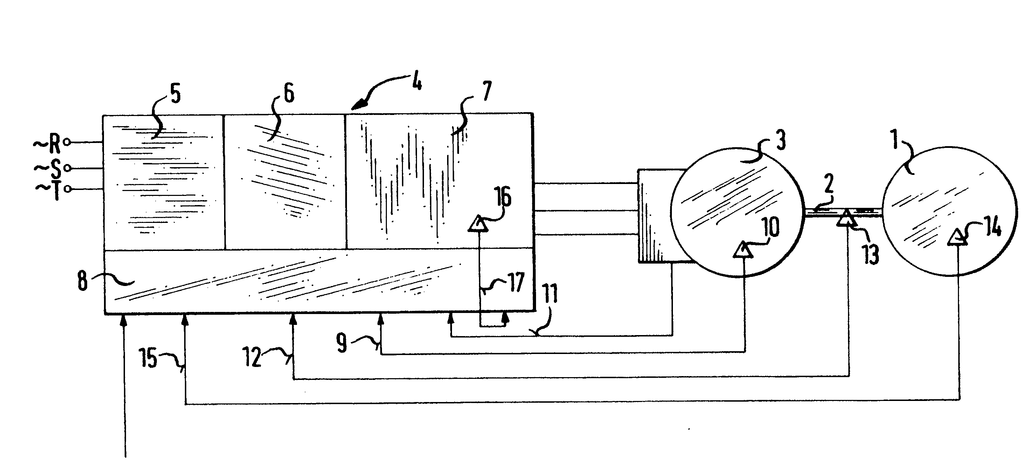

Weitere vorteilhafte Ausgestaltungen der Erfindung sind der nachfolgenden Beschreibung in Verbindung mit der Zeichnung zu entnehmen, die ein Ausführungsbeispiel der Erfindung näher erläutert.

Die Zeichnung zeigt ein Blockschaltbild eines erfindungsgemäßen Pumpenaggregats.

Das als bauliche Einheit ausgebildete Pumpenaggregat besteht im wesentlichen aus einer Pumpe 1, die über eine Welle 2 mit einem elektrischen Motor 3 antriebsverbunden ist, und einem dem Motor 3 vorgeschalteten Frequenzumrichter 4, mit dem die Motordrehzahl steuerbar ist.

Der Frequenzumrichter 4 weist in an sich bekannter Weise einen zum Anschluß an das elektrische Leitungsnetz vorgesehenen Gleichrichter 5, einen diesem nachgeschalteten Zwischenkreis 6, sowie einen sich daran anschließenden Leistungskreis 7 auf. Der Leistungskreis 7 ist zum Anschluß des Motors 3 vorgesehen. Der Gleichrichter 5 (auch Eingangskreis genannt), der Zwischenkreis 6 und der Leistungskreis 7 werden durch einen Steuer- und Regelkreis 8 in an sich bekannter Weise verknüpft.

Der Steuer- und Regelkreis 8 weist mehrere Steuereingänge auf, von denen hier fünf Eingänge für die vorbeschriebene Überlastsicherung durch Motordrehzahlabsenkung belegt sind.

Über eine Signalleitung 9 ist ein in der Wicklung des Motors 3 angeordneter Temperaturfühler 10 angeschlossen. Über die mit 11 gekennzeichnete Signalleitung erfolgt eine Übermittelung des an der Motorwicklung anstehenden Spannungssignals, über das innerhalb des Steuer- und Regelkreises 8 der Wicklungswiderstand ermittelt wird. Der Wicklungswiderstand gilt als Maß für die Wicklungstemperatur, so daß beim Erreichen eines vorgegebenen Widerstandswertes über den Steuer- und Regelkreis 8 in gleicher Weise eine Drehzahlabsenkung erfolgt, wie sie beim Erreichen der über die Signalleitung 9 über den Wärmesensor 10 ermittelten Wicklungstemperatur erfolgen würde.

Über eine Signalleitung 12 ist ein Temperaturfühler 13 mit dem Eingang des Steuer- und Regelkreises 8 verbunden. Der Temperaturfühler 13 ist innerhalb eines Lagers des Pumpenaggregats angeordnet. Beim Überschreiten einer vorbestimmten Lagertemperatur, bei der mit einer Überlastung des Pumpenaggregats - sei es im Motor 3, in der Pumpe 1 oder im Lager selbst - zu rechnen ist, wird dies über den Fühler 13 und die Signalleitung 12 zum Steuer- und Regelkreis 8 gemeldet und von diesem registriert, worauf eine Drehzahlabsenkung der vorbeschriebenen Größenordnung erfolgt.

Weiterhin ist ein Temperaturfühler 14 über eine Signalleitung 15 mit dem Eingang des Steuer- und Regelkreises 8 verbunden, der die Temperatur des innerhalb der Pumpe 1 geförderten Fluids mißt und an den Steuer- und Regelkreis 8 weiterleitet, so daß beim Überschreiten einer vorbestimmten Fluidtemperatur eine Drehzahlabsenkung über den Steuer- und Regelkreis 8 erfolgt.

Im Leistungskreis 7 des Freqzenzumrichters 4 ist ein Temperaturfühler 16 angeordnet, der über eine Signalleitung 17 mit dem Eingang des Steuer- und Regelkreises 8 verbunden ist. Auch hier wird die Temperatur innerhalb des Leistungskreises 7 durch den Steuer- und Regelkreis 8 überwacht, so daß beim Überschreiten einer vorbestimmten kritischen Temperatur eine Drehzahlabsenkung erfolgt.

Die vorbeschriebenen Einrichtungen zur Ermittlung einer den Überlastzustand des Pumpenaggregats kennzeichnenden Größe - mit Ausnahme des die Fluidtemperatur messenden Fühlers 14 - können sowohl in Alleinstellung als auch in Kombination für den vorbeschriebenen Überlastschutz eingesetzt werden. Die jeweiligen Kennwerte können am Frequenzumrichter 4 voreingestellt werden und sind veränderbar, so daß sie den örtlichen Einsatzbedingungen anpaßbar sind.

Wenn eine der vorbeschriebenen kritischen Größen erreicht wird, wird die Motordrehzahl um einen voreinstellbaren Wert abgesenkt. Der Wert der abgesenkten Drehzahl n' sollte nicht kleiner sein , als die Hälfte der Normaldrezhal n, da andernfalls der Förderstrom des Pumpenaggregats zu weit abfallen würde. Eine insbesondere beim Einsatz des Pumpenaggregats in Heizungsanlagen bevorzugte Drehzahlabsenkung liegt bei 80 Prozent der Normaldrehzahl (n' = 0,8 * n), da in diesem Bereich die Motorleistung nahezu halbiert ist und praktisch keine Minderleistung der Heizungsanlage zu erwarten ist.

## Patentansprüche

1. Pumpenaggregat, insbesondere für Heizungs- und Kühlanlagen, dessen Drehzahl durch Änderung der Arbeitsfrequenz eines den Elektromotor speisenden Frequenzumrichters veränderbar ist, mit einer das Aggregat vor thermischer Überlastung schützenden Einrichtung, wobei Pumpenaggregat und Frequenzumrichter eine bauliche Einheit bilden, dadurch gekennzeichnet, daß beim Erreichen einer den Überlastzustand kennzeichnenden Größe die Motordrehzahl n durch Ansteuerung des Frequenzumrichters (4) auf eine Motordrehzahl n' abgesenkt wird, wobei die Beziehung $n' \geq 0,5$ n gilt.

2. Pumpenaggregat nach Anspruch 1, dadurch gekennzeichnet, daß die den Überlastzustand kennzeichnende Größe eine Grenztemperatur ist.

3. Pumpenaggregat nach Anspruch 2, dadurch gekennzeichnet, daß die Grenztemperatur durch eine höchstzulässige Temperatur einer Wicklung im Stator bestimmt ist.

4. Pumpenaggregat nach Anspruch 3, dadurch gekennzeichnet, daß die Temperatur der Wicklung durch Messung elektrischer Größen, vorzugsweise durch Messung des elektrischen Wicklungswiderstands ermittelt wird.

5. Pumpenaggregat nach einem der Ansprüche 2 bis 4, dadurch gekennzeichnet, daß die Grenztemperatur durch eine höchstzulässige Lagertemperatur des Aggregats bestimmt ist.

6. Pumpenaggretat nach einem der Ansprüche 2 bis 5, dadurch gekennzeichnet, daß die Grenztemperatur durch eine höchstzulässige Temperatur in der Umrichterelektronik bestimmt ist.

7. Pumpenaggregat nach Anspruch 6, dadurch gekennzeichnet, daß die Grenztemperatur durch eine höchstzulässige Temperatur im Leistungsteil (7) des Frequenzumrichters (4) bestimmt ist.

8. Pumpenaggregat nach einem der Ansprüche 1 bis 7, dadurch gekennzeichnet, daß die Motordrehzahlabsenkung auch beim Erreichen einer vorbestimmten Temperatur des durch die Pumpe (1) geförderten Fluids erfolgt.

9. Pumpenaggregat nach einem der Ansprüche 1 bis 8, dadurch gekennzeichnet, daß die Motordrehzahl beim Unterschreiten der den Überlastzustand kennzeichnenden Größe wieder auf die Drehzahl n angehoben wird, wobei sich die Größe, bei deren Erreichen eine Drehzahlanhebung erfolgt, von der Größe, bei deren Erreichen eine Drehzahlabsenkung erfolgt, unterscheidet oder ein Totzeitglied vorgesehen ist.